# EUROPEAN PATENT APPLICATION

(11) **EP 1 566 968 A1**
(43) Date of publication of application: **24.08.2005**
(21) Application number: 05250918.9
(22) Date of filing: 17.02.2005
(51) Int. Cl.: H04N 7/18, H04N 7/14

(54) **Digital closed circuit television system**

(30) Priority: 18.02.2004 GB 0403556
(71) Applicant: Visimetrics (UK) Limited, Prestwick KA9 2TA (GB)
(72) Inventor: McLeod, Alistair, Ayr KA7 1XA (GB)
(74) Representative: Jones, Keith William

(57) **Abstract**

A digital closed circuit television system is disclosed enabling high-definition digital video and other information to be transmitted over standard co-axial cable as well as including bi-directional communication. According to one embodiment of the invention there is provided a video monitoring system comprising at least one digital video camera creating a digital video stream wherein the or each digital video camera produces a camera signal, at a particular transmission rate, representing at least the digital video stream for transmission over a co-axial cable infrastructure; an interface enabled to receive the camera signal from the or each digital video camera transmitted over a co-axial cable infrastructure and reconstruct the camera signal back into the digital video stream and send an interface signal to the or each digital video camera; and a storage medium wherein the or each digital video stream received by the interface can be stored.

## Description

The present invention is directed to a video monitoring system, and in particular to a computer controlled digital video monitoring system for applications in, but not restricted to, the closed-circuit television (CCTV) field.

Analogue CCTV cameras are traditionally based on a television standard which dictates maximum achievable resolution, fixed interlacing, fixed frame rate and fixed colour encoding. CCTV cameras have embraced more recent technological improvements such as Charge Couple Device (CCD) cameras and complementary metal-oxide semiconductor (CMOS) cameras. Typically, these newer cameras still adhere to the traditional television standards and thereby suffer from the same limitations. These limitations include:
- video signals are analogue and therefore subject to noise and degradation;
- closed circuit transmission distances are limited to cable length of approximately 200 metres;
- picture resolution is limited to 768 by 576 pixels;
- fixed frame rate of 25Hz;
- each frame consists of two interlaced half frames or fields; and
- each field is exposed at a different time causing jitter in still frames.

In addition to limitations associated with CCTV cameras, CCTV analogue video tape recording also suffers from many limitations. CCTV analogue video tape recorders are based on domestic Video Cassette Recorders (VCRs) and therefore are normally limited to 3 hours of recording at a normal frame rate. CCTV analogue video tape recorders, called time-lapse VCRs, are modified to run at a much slower rate enabling the video tape to last as much as 96 hours or longer. Time-lapse VCRs store much fewer images in each second to allow the video tapes to last for longer periods.

Video multiplexers are also used to store images from more than one camera on a single tape by storing a frame from each camera in sequence on to the video tape. The video tape can be played back through the video multiplexer (now a de-multiplexer) such that a particular camera's images may be viewed.

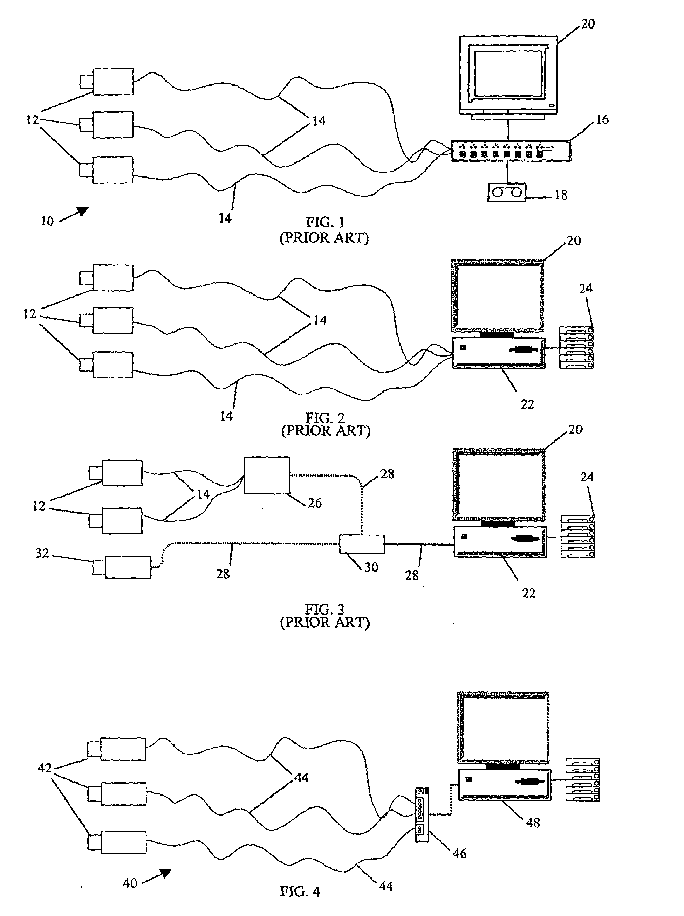

This prior art arrangement is shown in Figure 1. A CCTV system 10 comprises CCTV cameras 12, coaxial cables 14, a multiplexer 16, a video tape recorder 18 and a monitor 20.

The overall effect of the analogue video recording system is a loss of image quality and resolution at each stage due to the signal transfers and conversions. In addition, video tapes and VCRs degrade in quality over time, incidents are difficult to find, video tapes must be manually changed and filed regularly, and further degradation occurs if copies need to be made.

As shown in Figure 2, recent advances in video digitising electronics and hard disk capacities have resulted in digital video recording (DVR) systems becoming available. In this case, the multiplexer 16 and video tape recorder 18 are replaced by a computer system 22 and hard disk storage drives 24. Although, the DVR systems replace the video multiplexer and the analogue video recording system they still receive analogue video signals in the first instance.

Further developments in the CCTV field utilise conventional computer network technology, such as Ethernet networks, in order to interconnect video recorders and playback stations and to provide dial-up access for replay and control of images. Furthermore, this computer network technology is also being introduced to convey digital video images from the camera to the video recorder, monitor or similar equipment.

At present, the adaptation to allow the transfer of digital images is done in one of two ways: either
(i) by introduction of a network video server or module (NVM) between the camera and the network, or
(ii) by replacing the existing cameras with network integrated cameras, also known as "netcams". A NVM comprises a standard computer network connector and the electronic hardware required to digitise and compress the video signals from the conventional camera. The NVM, which may receive video signals from more than one camera, is controlled by any computer or data processing means connected to the network. With the NVM digitising and compressing the video signal fed to it by the camera(s), images from any cameras connected to the NVM can be transmitted via the network to any computers or other network devices, including other NVMs if desired. With the introduction of NVMs, the monitoring system is entirely digital in operation, save for the analogue connection between the video camera and the NVM itself.

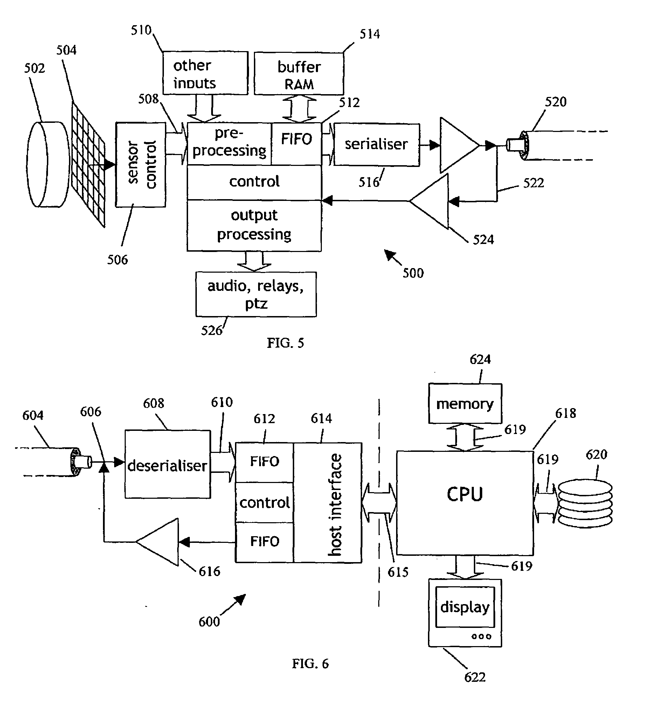

This arrangement is shown in Figure 3 where the CCTV cameras 20 are connected to a NVM 26 by way of the coaxial cables 14. Ethernet cables 28 connect the NVM 26 to a network hub 30 and then to the computer system 22.

The analogue connection between the video camera and the NVM carries conventional composite analogue video signals. Each frame of such signals is made up of a pair of interlaced fields, as dictated by television standards. One of the pair of fields comprises the odd numbered lines of the frame, while the other field comprises the even numbers lines of the frame, the odd and even numbered lines making up the full frame when interlaced. However, as the odd and even fields are captured at different points in time, any motion within the view of the camera will cause the completed frame image to have distorted portions at areas of motion within the image. Within the CCTV service in particular, it is common for only single fields to be captured to avoid this distortion effect. However, a disadvantage of this is that the vertical resolution of the image is halved.

As stated above, the alternative to NVMs is to replace the standard video camera with a network integrated camera, or netcam. A netcam 32 is shown in Figure 3 connected directly by ethernet cables 28 to the computer system 22 by way of the network hub 30. A netcam is essentially a camera which has its own NVM integrated therein. However, netcams which are currently available are simply standard video cameras with the NVM fitted in the camera box.
Thus, the composite video signal and the resultant problems discussed above are still present.

With these problems, it would be beneficial to introduce an improved netcam in which the analogue video signal was no longer required. However, one difficulty in introducing such an improved netcam is that the vast majority of the existing cabling used with conventional monitoring systems is 75-Ohm co-axial cable. Such cable could not be directly used for the improved netcam. The cabling normally used in computer network applications is standard CAT5, unscreened, twisted-pair cabling.

The CAT5 cable is extensively used in new structured cabling installations and the improved netcam could therefore be used on these networks without problem. However, there already exists a very large infrastructure of 75-Ohm co-axial cable which is used to connect remote video cameras to standard analogue equipment such as multiplexers, matrices, monitors and recorders. It is estimated that there is over 1 million kilometres of co-axial cabling installed worldwide for the exclusive use of CCTV cameras. Working on an average cost per camera, the installed base of cabling may represent a £3 billion to £5 billion investment by CCTV end-users. Thus, significant expenditure has already taken place in the installation of the cabling infrastructure, which often involves significant civil engineering operations such as the digging up of roads. As a result, it is unlikely that users will wish to go through the whole procedure again in order to replace the 75-Ohm cables with the CAT5 cables.

Thus, there exists the need for the two-way highspeed transmission of digital data over an existing 75-Ohm cable infrastructure.

It is an aim of the present invention to obviate or mitigate one or more of the problems discussed above.

According to a first aspect of the present invention there is provided a video monitoring system comprising:
at least one digital video camera creating a digital video stream wherein the or each digital video camera produces a camera signal, at a particular transmission rate, representing at least the digital video stream for transmission over a co-axial cable infrastructure;
an interface enabled to receive the camera signal from the or each digital video camera transmitted over a co-axial cable infrastructure and reconstruct the camera signal back into the digital video stream and send an interface signal to the or each digital video camera; and
a storage medium wherein the or each digital video stream received by the interface can be stored.

Preferably, the interface signal has a transmission rate lower than that of the camera signal.

Preferably, the video monitoring system is adaptable to varying quality of the coaxial cable, wherein the interface signal instructs the or each digital video camera to vary the transmission rate, the video monitoring system selecting a transmission rate based on an acceptable error in the camera signal.

Preferably, the or each digital video camera comprises a digital imaging sensor, the digital video stream thereby comprising a series of digital images created by the digital imaging sensor.

Preferably, the series of digital images have a maximum resolution according to the maximum resolution of the digital imaging sensor.

Preferably, the or each digital video camera can reduce the resolution of the digital video stream prior to transmitting the digital video stream in the camera signal.

Preferably, the or each digital video camera can compress the digital video stream prior to transmitting the digital video stream in the camera signal by utilising a video compression algorithm.

As the video monitoring system is completely digital there is no requirement to meet the television standards. Therefore, the resolution of video stream is only limited by the imaging sensor used. There is not always a requirement to have the highest resolution possible to be transmitted from a digital video camera and therefore enabling the resolution of the transmitted video stream to be reduced can be advantageous.

Preferably, the interface signal contains instructions for function of the or each digital video camera or devices connected to the or each digital camera, which may be, for example, instructions for:
- the digital camera to pan, tilt or zoom;
- to play an audio signal transmitted in the interface signal through a speaker on the digital camera;
- to increase or reduce the resolution of the digital video stream transmitted in the camera signal;
- to modify the amount of compression or the method of compression of the digital video stream.

Further preferably, the or each digital camera can transmit additional information within the camera signal such as, for example:
- audio from a microphone connected to the or each digital video camera;
- alarm signals from alarms connected to the or each digital video camera;
- data from motion detection functions of the digital video camera when activity is detected in the series of digital images;
- pan, tilt or zoom position of the digital video camera;
- other data from devices connected to the digital camera.

Motion detection in video is a known technique which can be implemented in software or hardware within the digital video camera. Motion detection could be used to send a digital video stream only when there is activity detected by the motion detection function.

Conventional pan, tilt and zoom (PTZ) control of CCTV cameras do not report the current position of the function. An operator must adjust the camera manually to use the functions. The digital video camera can transmit the position of the PTZ functions as additional data. As the position of each function is known other functions may use this information. For example, motion detection and PTZ position may be combined to enable an automatic target-tracking system.

The camera signal may additionally or alternatively be transmitted over a digital cable infrastructure, and the interface signal may additionally or alternatively be transmitted over a digital cable infrastructure.

Preferably, the video monitoring system further comprises a display system adapted to allow the or each digital video stream from the storage medium to be displayed immediately or at a later time.

Preferably, the video monitoring system further comprises a control system adapted to control any function of the or each digital camera via the interface.

Preferably, the interface can output standard analogue composite video.

By enabling output of standard analogue composite video, compatibility is maintained with existing video equipment which may still be employed in addition to video monitoring system.

According to a second aspect of the present invention there is provided a digital video camera enabled to create a digital video stream wherein the digital video camera produces a camera signal, at a particular transmission rate, representing information from the digital video camera including a digital video stream for transmission over a co-axial cable infrastructure.

According to a third aspect of the present invention there is provided a digital video interface enabled to create a digital video stream wherein the digital video interface produces a camera signal, at a particular transmission rate, representing information from a high-resolution camera including a digital video stream for transmission over a co-axial cable infrastructure, enabling the information from the high resolution camera to be converted into a format suitable for transmission as the camera signal.

According to a fourth aspect of the present invention there is provided a digital video recorder comprising an interface enabled to receive a camera signal from a digital video camera or a digital video interface transmitted over a co-axial cable infrastructure, reconstruct the camera signal back into a digital video stream and send an interface signal to a digital video camera or digital video interface; and a storage medium wherein the or each digital video stream received by the interface can be stored.

According to a fifth aspect of the present invention there is provided a method of communicating a camera signal and interface signal over a co-axial cable infrastructure, the method comprising:
instructing, by means of the interface signal, variance of transmission rate of the camera signal;
monitoring the camera signal to detect an error rate for a particular transmission rate;
selecting a transmission rate based on an acceptable error rate; and
instructing, by means of the interface signal, for the camera signal to be transmitted at the selected transmission rate.

Preferably, the interface signal is communicated at a low transmission rate relative to the camera signal.

Preferably, wherein the transmission rate of the camera signal is ramped from a minimum transmission rate to a maximum transmission rate.

Preferably, wherein the acceptable error rate is calculated using a checksum.

An embodiment of the present invention will now be described with reference to the following drawings in which:
Figure 1 shows a prior art Closed Circuit Television (CCTV) system;
Figure 2 shows a prior art CCTV system with Digital Video Recording;
Figure 3 shows a prior art networked video system;
Figure 4 shows a computer controlled digital video system embodying the present invention;
Figure 5 shows a schematic of a digital camera transceiver;
Figure 6 shows a schematic of an interface transceiver and recorder system; and
Figure 7 shows a topology for a computer controlled digital video system.

Referring to Figure 4, a video monitoring system 40 has digital video cameras 42 connected to an interface 46 by way of standard coaxial cables 44. The interface 46 in turn is connected to the computer system 48. The interface 46 may be a stand alone device, as shown in Figure 4, or it may form part of the computer system 48, such as a PCI (Peripheral Component Interconnect) interface card.

The video monitoring system 40 has an adaptable data rate for transmission and reception of signals from and to the digital video camera 42.

To minimise costs, it is envisaged that existing coaxial cables would be used in the video monitoring system 40 where possible. This can mean that the quality of transmission associated with the existing coaxial cables can vary dependent on the current condition and quality of the coaxial cables themselves.

To enable an adaptable data rate the system 40 ramps the transmission rate of the interface 46 incrementally over successive frames. For example, the data rate may initially be 135Mbit/s and then ramped up over the discrete rates 180Mbit/s, 270Mbit/s, 360 Mbit/s and 540Mbit/s. An error figure derived from the transmission rate will be calculated and communicated back to the interface 46. This error figure could be calculated, for example by using a checksum to ensure the correct information was received.

Referring to Figure 5, a digital video camera 500 has a lens 502 that focuses light onto a pixel array 504. A readout control 506 reads the information from the pixel array 504 at intervals producing frames of a digital video stream 508. A number of other inputs 510 can also be introduced at this stage. A processor 512, which in this case is a Field Programmable Gate Array (FPGA), pre-processes and compresses the digital video stream 508 and the other inputs 510 to produce a digital stream before a first-in first-out (FIFO) program, with a buffer RAM 514, passes the digital stream to a serialiser 516 producing a serialised digital stream. A cable driver 518 then transmits the serialised digital stream along a coaxial cable 520.

The serialised digital stream is transmitted using Positive Emitter Coupled Logic (PECL). Using PECL to transmit the digital stream utilises the bandwidth associated with the coaxial cable 520 much more fully than, for example, transmitting analogue video signals.

The coaxial cable 520 may also contain transmitted serial information 522 for the digital video camera 500. An input buffer 524 receives the transmitted serial information 522 and inputs it to the controller 512. The processor 512 decodes any instructions or data contained in the transmitted serial information and formats the instructions for output to any appropriate digital video camera function 526. These functions typically include controls for iris, pan, tilt, zoom and audio.

Referring now to Figure 6, an interface 600 and digital recorder 602 are shown. A cable 604 carries a serialised digital stream 606 from a digital video camera, such as that shown in Figure 5. A deserialiser 608 converts the serialised digital stream to a parallel digital stream 610. The deserialiser 608 also carries out automatic signal equalisation adapting to the cable 604 and other variations in signal level and timing. The parallel digital stream 610 is fed into a processor 612 where the parallel digital stream 610 is manipulated for transmission through a host interface 614 which, in this example, is a standard Peripheral Component Interconnect (PCI) bus, producing an interface stream 615. The processor 612 also receives control signals and other data, such as audio for output on a digital camera loud speaker, through the interface stream 615 from the host interface 614 which is serialised and outputted to a cable driver 616 and is transmitted through the cable 604.

The digital recorder 602, in this case, is a personal computer (PC) and the interface 600 is a PCI based printed circuit board which slots into a motherboard within the digital recorder 602. The central processing unit (CPU) 618 of the digital recorder 602 can receive information from the interface 600 through its PCI local bus. Software executed on the digital recorder 602 handles the decompression and other processing to manipulate any video data in the interface stream 615 into a standard video format, such as MPEG-4, and other data in the interface stream 615 into other formats as appropriate, such as audio data into MP3. The CPU 618 may store data 619 from the interface stream 615 on a storage medium 620, which in this case is a hard disk. The data 619 may also be displayed on a monitor 622 immediately or from the hard disk 620 at a later date. A volatile memory 624 is available to the CPU 618 for short-term storage during processing and displaying of the interface stream 615 or the data 619.

The CPU 618 may also accept commands and input data from an input means (not shown) such as a keyboard or microphone. The CPU 618 passes the commands or input data through the host interface 614 which is in turn forwarded to a digital video camera as described above.

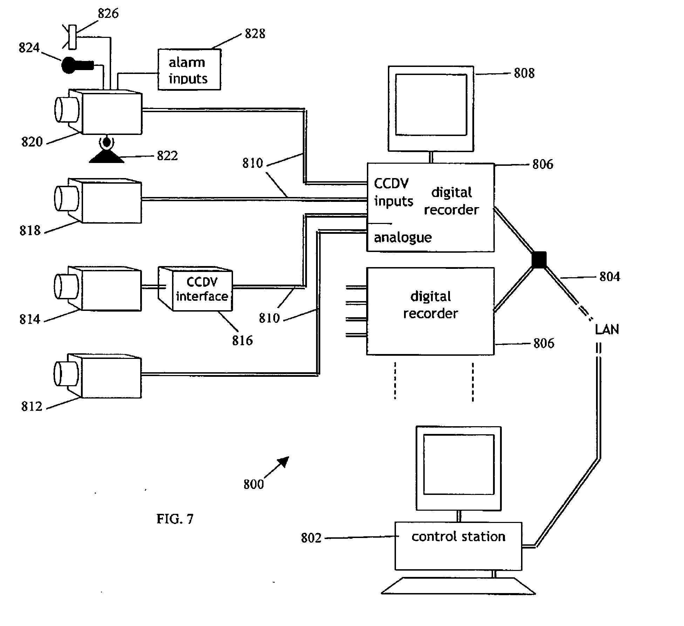

Referring now to Figure 7, a video monitoring system 800 has a control station 802 connected by a Ethernet Local Area Network (LAN) 804 to a number of digital video recorders (DVRs) 806. The DVRs 806 may perform more functions than simply recording. In this case, the DVRs may comprise an interface for bi-directional communication to control various functions of cameras. Each DVR 806 may have an associated high-resolution display 808 which allows viewing real-time or recorded playback of any associated video signals. Existing coaxial cables 810 provide communication of video signals to the DVRs 806. Each DVR 806 can receive both analogue video signals and digital video signals. The video monitoring system 800 may have a number of different types of cameras.

A standard CCTV analogue camera 812 is connected to the DVR 806 directly allowing backwards compatibility with previous systems if necessary.

A high-resolution camera 814 is connected to a Computer Controlled Digital Video (CCDV) Interface 816 which in turn is connected to the DVR 806 through the existing coaxial cables 810. The CCDV Interface 816 allows high resolution cameras which are not designed for use in the video monitoring system 800 to still provide useful inputs.

The CCDV interface 816 operates in a similar fashion to the components of the digital video camera 500 required for transmission and reception including a processor, a buffer, a serialiser and a cable driver. The CCDV interface 816 may have a number of inputs such as an audio/video (AV) input, an s-video input and/or any other suitable video, audio or control input. The CCDV interface 816 pre-processes and compresses information received at its inputs before serialising for transmission along a coaxial cable 810. The CCDV interface 816 may also have outputs for transmitting control information from the DVR 806 to the high resolution camera 814.

A first CCDV camera 818 is connected directly to the DVR 806 to provide high resolution video images over the existing coaxial cables 810. A second CCDV camera 820 is also connected over the existing coaxial cables 810 to the DVR 806. The second CCDV camera 820 has additional functions controllable from signals sent from the DVR 806. A connection 822, and associated motors (not shown), allow pan and tilt movement for the camera 820. A microphone 824 provides audio input which can be recorded by the DVR 806 if required. A speaker 826 allows audio signals sent from the DVR 806 to be played. The camera 820 also receives alarm inputs 828 which are also transmitted to the DVR 806 and on to the control station 802 if required. The alarm inputs 828 can be a variety of different alarm signals such as, for example, contact breaker circuits which would show whether a door had been opened or fire detection equipment for identification of fires.

Modifications and improvements may be incorporated without departing from the scope of the invention. For example, the present invention may incorporate automatic digital signal balancing and error correction to provide optimum data transmission rates for each camera-to-control link.

## Claims

1. A video monitoring system comprising:
at least one digital video camera creating a digital video stream wherein the or each digital video camera produces a camera signal, at a particular transmission rate, representing at least the digital video stream for transmission over a co-axial cable infrastructure;
an interface enabled to receive the camera signal from the or each digital video camera transmitted over a co-axial cable infrastructure, reconstruct the camera signal back into the digital video stream and send an interface signal to the or each digital video camera; and
a storage medium wherein the or each digital video stream received by the interface can be stored.

2. A system as claimed in claim 1, wherein the interface signal has a transmission rate lower than that of the camera signal.

3. A system as claimed in claim 1 or claim 2, adaptable to varying quality of the coaxial cable, wherein the interface signal instructs the or each digital video camera to vary the transmission rate, the video monitoring system selecting a transmission rate based on an acceptable error in the camera signal.

4. A system as claimed in any of claims 1 to 3, wherein the or each digital video camera comprises a digital imaging sensor, the digital video stream thereby comprising a series of digital images created by the digital imaging sensor.

5. A system as claimed in claim 4, wherein the series of digital images have a maximum resolution according to the maximum resolution of the digital imaging sensor.

6. A system as claimed in any of claims 1 to 5, wherein the or each digital video camera can reduce the resolution of the digital video stream prior to transmitting the digital video stream in the camera signal.

7. A system as claimed in any of claims 1 to 6, wherein the or each digital video camera can compress the digital video stream prior to transmitting the digital video stream in the camera signal by utilising a video compression algorithm.

8. A system as claimed in any of claims 1 to 7, wherein the interface signal contains instructions for function of the or each digital video camera or devices connected to the or each digital camera, which may be, for example, instructions for:
the digital camera to pan, tilt or zoom;
to play an audio signal transmitted in the interface signal through a speaker on the digital camera;
to increase or reduce the resolution of the digital video stream transmitted in the camera signal;
to modify the amount of compression or the method of compression of the digital video stream.

9. A system as claimed in any of claims 1 to 8, wherein the or each digital camera can transmit additional information within the camera signal such as, for example:
audio from a microphone connected to the or each digital video camera;
alarm signals from alarms connected to the or each digital video camera;
data from motion detection functions of the digital video camera when activity is detected in the series of digital images;
pan, tilt or zoom position of the digital video camera;
other data from devices connected to the digital camera.

10. A system as claimed in any of claims 1 to 9, wherein the video monitoring system further comprises a display system adapted to allow the or each digital video stream from the storage medium to be displayed immediately or at a later time.

11. A system as claimed in any of claims 1 to 10, wherein the video monitoring system further comprises a control system adapted to control any function of the or each digital camera via the interface.

12. A system as claimed in any of claims 1 to 11, wherein the interface can output standard analogue composite video.

13. A digital video camera enabled to create a digital video stream wherein the digital video camera produces a camera signal, at a particular transmission rate, representing information from the digital video camera including a digital video stream for transmission over a co-axial cable infrastructure.

14. A digital video interface enabled to create a digital video stream wherein the digital video interface produces a camera signal, at a particular transmission rate, representing information from a high-resolution camera including a digital video stream for transmission over a co-axial cable infrastructure, enabling the information from the high resolution camera to be converted into a format suitable for transmission as the camera signal.

15. A digital video recorder comprising an interface enabled to receive a camera signal from a digital video camera or a digital video interface transmitted over a co-axial cable infrastructure, reconstruct the camera signal back into a digital video stream and send an interface signal to a digital video camera or digital video interface; and a storage medium wherein the or each digital video stream received by the interface can be stored.

16. A method of communicating a camera signal and interface signal over a co-axial cable infrastructure, the method comprising:
instructing, by means of the interface signal, variance of transmission rate of the camera signal;
monitoring the camera signal to detect an error rate for a particular transmission rate;
selecting a transmission rate based on an acceptable error rate; and
instructing, by means of the interface signal, for the camera signal to be transmitted at the selected transmission rate.

17. A method as claimed in claim 16, the interface signal is communicated at a low transmission rate relative to the camera signal.

18. A method as claimed in claim 16 or claim 17, wherein the transmission rate of the camera signal is ramped from a minimum transmission rate to a maximum transmission rate.

19. A method as claimed in any of claims 16 to 18, wherein the acceptable error rate is calculated using a checksum.
